(19) Europäisches Patentamt
European Patent Office
Office européen des brevets

(11) Publication number : 0 482 933 A2

# (12) EUROPEAN PATENT APPLICATION

(21) Application number : 91309852.1

(22) Date of filing : 24.10.91

(51) Int. Cl.[5] : G02B 5/08, B60R 1/04, C03C 17/06, G02B 1/10

(30) Priority : 25.10.90 US 603568

(43) Date of publication of application : 29.04.92 Bulletin 92/18

(84) Designated Contracting States : DE FR GB IT

(71) Applicant : DONNELLY CORPORATION
414 East Fortieth Street
Holland Michigan 49423 (US)

(72) Inventor : Caskey, Gregory T.
114 East 31st Street
Holland, Michigan 49423 (US)
Inventor : Lynam, Niall R.
248 Foxdown Road
Holland, Michigan 49424 (US)
Inventor : Arendsen, Rodney S.
10281 Springwood Drive
Holland, Michigan 49423 (US)

(74) Representative : Sheard, Andrew Gregory et al
Kilburn & Strode 30, John Street
London WC1N 2DD (GB)

## (54) Spectrally selective mirror and method for making same.

(57) A spectrally selective, glare-reducing mirror for vehicles which consists of a substrate having a multi-layer coating which includes a thin, transparent dielectric layer, preferably of titanium dioxide at a thickness of 600-650 Å and a very thin layer of metal, preferably of aluminium or silver, at a thickness of from 25 to 150 Å. The dielectric layer is closest to a source of incident light to be reflected by the mirror. When applied to the rear surface of a transparent substrate such as glass, the metal layer may also be coated with light absorbing material such as paint for protection and reduction in unwanted reflections. With these preferred dielectric and metal layer thicknesses, a blue reflecting mirror may result having a glare-reducing luminous reflectance from 35% to 60%, while costs can be reduced due to lesser amounts of metal being required than in prior known mirrors.

EP 0 482 933 A2

This invention relates to mirrors and, more particularly, to rearview mirrors for vehicles which are spectrally selective to enhance visibility in predetermined light conditions while having luminous reflectance levels adapted to reduce glare and enhance visibility.

Vehicular rearview mirrors, especially for the exterior of an automobile or truck, are broadly classified as either spectrally nonselective, i.e., metallic or silvery in appearance, or spectrally selective, i.e., those which use light interference to enhance reflectance in some portion of the visible wavelength spectrum relative to other portions. For example, a first surface, chromium coated, glass mirror is a spectrally nonselective or metallic appearing mirror. Various types of commercially available, anti-dazzling, glare reducing blue mirrors are exemplary of spectrally selective mirrors.

Spectral selectivity makes the reflectance from the mirror dependent on the light source which projects light incident on the mirror as well as on the detector which senses the reflected light rays. In vehicular applications, the light source of most interest is usually a headlight while the detector is the human eye. The luminous reflectance of rearview mirrors is measured by using a light source which models light from a headlight and by using a detector with a filter which mimics the spectral selectivity of the human eye when in its day-adapted (photopic) mode. Such measurements of luminous reflectance are performed in accordance with SAE (Society of Automotive Engineers) Recommended Practice J964a for measurement of rearview mirror reflectivity. The human eye adapts to various levels of ambient light by changing its sensitivity to various colours. During the day, when light is abundant, human eye sensitivity is highest in the green spectral regions. As the light level drops, however, the peak eye sensitivity moves toward the shorter blue wavelengths. Since headlights have a spectral emission that is strong in longer yellow wavelengths but weak in blue, a glare reducing or anti-dazzling mirror which optimizes low light vision should accentuate reflectance in the blue regions where the eye is most sensitive but reduce reflectance in the yellow regions thereby reducing headlight reflectance. Such a mirror is, therefore, blue in colour.

In addition, the optimal vehicular mirror which reduces glare and provides an anti-dazzling effect also has sufficient luminous reflectance to provide an image which is bright enough that the driver can quickly, accurately and easily gather information about the environment even in low light level conditions, but not so bright, i.e. not greater than 60% luminous reflectance or thereabouts, as to act as a source of glare from following headlights at night. Moreover, governmental regulations such as Federal Motor Safety Standard 111 in the United States require a mirror luminous reflectance of at least 35%. Likewise, in Europe, European Economic Community Council Directive 71/127/EEC requires a similar reflectance of at least 40% for mirrors. Thus, it is desirable that a rearview mirror have a luminous reflectance in the 35% to 60% range and that it be spectrally selective with the spectral selectivity being such that the mirror is more strongly reflecting in the blue/green region of the visible spectrum below about 560 nanometres than it is reflecting in the yellow/red region above 560 nanometres so that the mirror has a blue tint as viewed in reflectance.

Beyond headlight glare reduction in the yellow/red spectral regions and enhanced reflectivity of blue light where the human eye is sensitive at night, the use of blue mirrors on vehicles has another advantage. Blue is perceived by consumers to be an aesthetically pleasing, relaxing colour. Consequently, blue mirrors have found consumer acceptance and approval on vehicles. For all these reasons, spectrally selective blue automotive rearview mirrors of luminous reflectance in the 35%R to 60%R range have been widely used, particularly as exterior mirrors on luxury vehicles.

In order to meet the above objectives, numerous types of spectrally selective blue mirrors have been used in the past. Many prior mirrors, such as those disclosed in U.S. Patent No. 4,673,248 and West German No. DE 34 360 16 have used relatively thick layers of opaque or near opaque metal having a luminous or bulk reflectance below about 80% such as alloys of nickel/chrome, aluminium/copper, nickel/cobalt, tin/copper or singular metals such as chromium, titanium, zinc or tin. Such metals are typically combined with various other layers, usually including dielectric materials. Metals having high bulk reflectance over 80% such as aluminium or silver in opaque layers have been avoided in spectrally selective rearview mirrors because such mirrors often have poor spectral selectivity. The use of the above-mentioned different alloys or singular metals such as chromium, titanium, zinc or tin which have lower total reflectances is necessary to avoid such loss of spectral selectivity. Hence, such mirrors often require more exotic metals or alloys, thicker metal layers and longer layer coating times resulting in more expensive products. Further, such mirrors have often failed to simultaneously achieve a commercially desirable blue spectral selectivity and maintain at least 35% luminous reflectance, particularly so in constructions where the thin film coatings are located behind, and are protected by, the substrate.

Accordingly, while the value of spectrally selective, blue mirrors has been previously recognized in the vehicular industry, a need has remained for a commercially acceptable, economically produced mirror which simultaneously achieves and combines luminous reflectance (meeting minimum safety standards in the U.S.A. or Europe) with good glare reduction and appreciable spectral selectivity especially in the blue visible wavelength regions of the spectrum, to provide for enhanced low light visibility.

Thus according to a first aspect of the present invention there is provided a mirror (such a spectrally selective, glare reducing mirror suitable for vehicles) comprising a substrate having a front and rear surface and a multi-layer coating provided on the substrate, the coating comprising a layer of transparent, dielectric material and a layer of metal, at least one of the metal or dielectric layers being applied directly to the substrate, the metal layer having a thickness of from 25 to 150 angstroms (Å) and the layer of dielectric material being positioned closest to the source of incident light to be reflected by the mirror. Such mirrors may provide a desired luminous reflectance at a level which reduces reflected glare while also providing appreciable spectral selectivity in the reflected light. In this specification reference to front surfaces of, for example a substrate, refer to the surface that is at first incident to the light to be reflected. Generally it is preferred that the dielectric layer is in front of the metal layer (or the metal layer is behind the dielectric layer).

In one embodiment the substrate may be transparent and the dielectric layer may be located to the rear of the substrate (that is applied to the rear substrate surface) and the metal layer may be located to the rear of both the substrate and dielectric layer (such as being applied to the dielectric layer). Thus, in this embodiment the dielectric layer is located in between the substrate and the metal layer.

In another embodiment the metal layer is located with the front of the surface (such as applied to the front substrate surface) and the dielectric layer may then be in front of the metal layer (such as applied to the metal layer).

Suitably the metal layer comprises aluminium and/or silver. Preferably the metal layer will consist of one of these metals.

The metal layer will preferably have a luminous light transmittance of from 9 to 63%. In such circumstances the mirror may then have a luminous light reflectance of from 35% to 60%.

It is preferred that the mirror has a metal layer which comprises aluminium having a thickness of about 80 Å, so that it may have a luminous light transmittance of about 22%, the mirror therefore having a luminous reflectance of greater than 35%.

Preferably the metal layer has a thickness of from 80 to 100 Å and will suitably have a light transmittance of from 16 to 22% and reflectance of from 40 to 51%.

The dielectric layer suitably has a refractive index of at least 2.0 and preferably of about 2.4. It suitably has an optical thickness of one-quarter wavelength of light in the visible region. The thickness of the dielectric layer is suitably from 500 to 700, such as from 600 to 650, Å.

Preferably the dielectric layer comprises titanium dioxide, tantala and/or tungsten oxide. ,The former is preferred and may have an index of refraction of about 2.4. Such layers suitably have an optical thickness of about 1440 Å.

Preferably, (for example if the substrate is transparent) the mirror may have a coating of light absorbing material on its rear surface. However, the substrate may be opaque and/or highly light absorbing in some embodiments.

Suitably the metal layer comprises aluminium having a thickness of about 100 Å in a luminous light transmittance of about 16% and/or the mirror has a luminous light reflectance greater than 35%.

In preferred embodiments the dielectric layer is titanium dioxide, and has a index of refraction of about 2.4 and a thickness of about 650 Å.

Advantageously the mirror is provided with a protective coating of light absorbing material that is located over the metal layer, the light absorbing material absorbing light uniformly in all visible wavelengths. It may able provide an environmental barrier to protect the multi-layer coating against moisture salt and other elements encountered in vehicle driving.

In some embodiments the dielectric layer will have an index of refraction greater than 2.0, have a light absorbtivity which does not significantly attenuate light passing therethrough, and has an optical thickness of about one-quarter of the wavelength of visible light. Preferred materials for the dielectric layer include titanium dioxide, tantala and tungsten oxide.

The protective coating is suitably a layer of paint or lacquer. This may be coloured blue or black.

It will be appreciated that more than one layer of dielectric material may be provided. In some embodiments a second layer of dielectric material may be provided which is suitably located to the front of the substrate such as located on the front substrate surface. The two layers of dielectric material may suitably be formed from the same material and may have substantially the same thickness, for examples two layers of titanium dioxide, each having a thickness of 600 Å and a refractive index of about 2.4.

In some embodiments a third and fourth layer of dielectric material may be provided. The third layer may be located in front of the second dielectric layer (such as applied or coated over the second layer) and the fourth layer may be located behind the metal layer (such as applied or coated over the metal layer. In this embodiment it is preferred that the first layers of dielectric material comprise (or are formed from) titanium dioxide, for example each having a thickness of about 600 Å, a refractive index of about 2.4, a third and fourth dielectric layers comprising silicon dioxide (such as being formed from silicon dioxide), for example each having a thickness of about 1,000 Å and a refractive index of about 1.45.

The invention thus also contemplates a spectrally selective, glare reducing mirror for vehicles comprising:

a transparent substrate having a first/front surface and second/rear surface;

a thin layer of transparent, dielectric material on the second rear substrate surface;

a layer on the layer of dielectric material; and

a protective coating of light absorbing material over the metal layer for absorbing light passing through the substrate, dielectric layer and metal layer and protecting the dielectric and metal layers against environmental effects.

The metal layer will usually have a thickness of from 25 to 150 Å to provide substantial transparency along with significant reflectivity. The dielectric layer may have an optical thickness of about one-quarter of the wavelength of light in the visible region of the spectrum. Suitably the mirror will have a luminous reflectance of between 35 and 60% of light incident on the first/front surface of the substrate. The mirror may also provide a desired luminous reflectance at a level which reduces reflected glare while providing appreciable spectral selectivity in the reflected light.

The dielectric layer is suitably titanium dioxide having an index of refraction of about 2.4 and a thickness of between 550 and 750 Å.

The protective coating is suitably paint or lacquer and such a coating may envelope and cover the edges of the dielectric and thin metal layers.

Preferably the substrate is glass.

According to a second aspect of the present invention there is provided a method of manufacturing a mirror, the method comprising providing a multilayer coating on a substrate having a front and rear surface, the coating comprising a layer of transparent, dielectric material and a layer of metal, at least one of the metal or dielectric layers being applied directly to the substrate, the metal layer having a thickness of from 25 to 150 Å, the layer of dielectric material being positioned closest to a source of incident light to be reflected by the mirror.

In preferred embodiments the method comprises:

(1) providing a substrate having a front and rear surface;

(2) coating at least one surface of the substrate with a layer of dielectric material to a desired thickness;

(3) heating the substrate to a temperature sufficient to allow bending of the coated substrate;

(4) bending the heated, coated substrate to a desired curvature; and

(5) coating the bent, coated substrate, over the layer of dielectric material, with a layer of metal having a thickness of from 25 to 150 Å.

The substrate is suitably glass, such as a sheet of flat glass.

The method suitably includes coating the substrate with titanium dioxide. The dielectric coating may thus include vacuum sputter coating of the substrate with titanium dioxide using a titanium cathode in an atmosphere of oxygen. Preferably the dielectric coating is to a thickness of 500 to 700 Å.

The metal layer preferably comprises aluminium to a thickness of about 100 Å.

The heating and bending suitably comprises heating the dielectric coated substrate to a temperature exceeding 450°C followed by bending the heated, coated substrate in a mould.

The method may additionally include cutting the bent, coated substrate to the required shape, such as the shape of a rearview mirror element.

In addition, the method may also comprise coating the metal layer with a layer of light absorbing material.

Preferably the dielectric layer is coated with a metal layer which is aluminium or silver. The metal layer may be coated with a layer of protective material to resist degradation of the metal and dielectric layers from environmental effects.

The method preferably includes providing the dielectric material by dipping the substrate in a precursor of the dielectric material dissolved in a solvent so that both the front surface and rear surface of the substrate are wetted with the solution, and firing the wetted substrate to a temperature sufficient to reduce the solution on the surfaces to an oxide, thereby forming the dielectric material. Preferably the coatings are performed with in-line processing such that the coatings occur in processing units which are sequentially positioned.

Thus the invention specifically contemplates a method of manufacturing a spectrally selective, glare reducing mirror for vehicles comprising:

(1) providing a sheet of flat glass having front and rear surfaces;

(2) coating one surface of the sheet with a thin layer of dielectric material of a desired thickness;

(3) coating the coated glass over the layer of dielectric material with a metal layer; and

(4) cutting the coated sheet into desired shapes useful as rearview mirrors for vehicles.

The method may include coating the metal layer with a protective material to resist degradation of the metal and dielectric layers from environmental effects.

Preferred features and characteristics of the second aspect of the present invention are as for the first *mutatis mutandis*.

The present invention seeks to provide a solution to the above need with a spectrally selective mirror which may simultaneously achieve consumer and regulatory acceptable luminous reflectance with significant spectral selectivity and may thereby produce a high quality, glare reducing rearview mirror which may both enhance low light visibility while meeting minimum reflectance governmental safety standards. The invention seeks to achieve this result through the use of a very thin metal layer, preferably of a high bulk reflectance metal such as aluminium or silver, over or behind a thin dielectric layer on a substrate which may be formed from glass or another suitable material. Minimum governmental reflectance safety standards can be met with such highly reflective metals by making the metallic layer sufficiently thin as to be substantially transparent yet reflecting a sufficient amount of the incident light to meet minimum standards. Spectral selectivity is provided by the thin dielectric layer suitably of a thickness sufficient to produce the desired interference, namely, about one-quarter of those wavelengths in the desired visible region of the spectrum, and adjusted so as to maximize reflectance in the blue visible region.

In one embodiment, the invention relates to a spectrally selective, glare reducing mirror suitable for vehicles comprising:

a substrate having front and rear surfaces;

a multi-layer coating on the substrate including a thin layer of transparent, dielectric material and

a very thin layer of metal, at least one of the metal and dielectric layers being applied directly to the substrate.

The metal layer may have a thickness within the range of between 25 and 150 Å to provide both substantial transparency along with significant reflectivity. The layer of dielectric material can be positioned closest to a source of incident light to be reflected by the mirror. Thus, the mirror may provide a desired luminous reflectance at a level which reduces reflected glare while providing appreciable spectral selectivity in the reflected light.

In another embodiment of the invention, the substrate may be transparent with the dielectric layer being applied to the rear substrate surface while the metal layer is applied over the dielectric layer to the rear of the dielectric layer. Thus, and desirably, the multi-layer coating is protected by the substrate from damage due to scratching or abrasion and from direct contact with the outside environment. In this form, a protective coating of light absorbing material such as paint may be applied over the metal layer to uniformly absorb light in all visible wavelengths to reduce extra-mirror imaging (reflectance from objects other than the mirror, i.e., from anything behind the mirror) and provide an environmental barrier which may protect the multi-layer coating against moisture, salt and other elements encountered in vehicle driving.

The metal layer is may however be applied to the front substrate surface. The dielectric layer is suitably applied over the metal layer in front of the metal layer. In this form, the light absorbing coating may be applied to the rear surface of the substrate if the substrate is transparent. Alternatively, the substrate may be made of an opaque material in which case the light absorbing coating is unnecessary.

Preferably the metal layer comprises or consists of aluminium. The layer may have a thickness of between about 80 and 100 Å suitably a light transmittance of between 2% and 16% and a luminous reflectance of between about 42% and 51%.

Similarly the dielectric layer preferably comprises (or consists of) titanium dioxide. The layer suitably has an index of refraction of about 2.4 and/or a thickness of about 600 to 650 Å. The dielectric layer may also be made from other suitable materials such as tantala and/or tungsten oxide.

The invention also relates to a method for the manufacture of a spectrally selective, glare reducing mirror suitable for vehicles that may be a more commercially efficient, and lower cost method than those of the prior art. In this method, curved mirrors may be made by providing substrate (e.g. a sheet of flat glass) having front and rear surfaces, coating one surface of the substrate (e.g. sheet) with a thin layer of dielectric material of a desired thickness, heating the coated glass to a temperature sufficient to allow bending of the coated substrate (e.g. glass), bending the heated, coated substrate to a desired curvature, followed by coating the bent, coated substrate (e.g. glass) over the layer of dielectric material with a very thin layer of metal suitably having a thickness within the range of between about 25 and 150 Å. Alternatively, the process can be repeated without the bending stage to economically produce flat mirrors.

Preferably, the thin metal layer may be coated with a layer of light absorbing material (e.g. paint) to try to reduce extra-mirror imaging. It may also form a protective barrier against environmental effects.

Accordingly, the present invention seeks to provides a unique spectrally selective, glare reducing mirror that may be especially useful in vehicular applications by incorporating a high bulk reflectance metal in a layer sufficiently thin as to be significantly transparent while sufficiently reflective to meet known standards. The metal layer is usually significantly thinner than prior known metal layers in spectrally selective mirrors. Moreover, the present construction may provide sufficient minimal luminous reflectance to meet known governmental standards while reducing material usage and coating time which may result in reduced costs and increased production efficiency and, desirably a more economical product. Moreover, the invention may allow the use of more common, less expensive metals such as aluminium as compared to exotic, more expensive alloys. Further, a unique method is provided which may produce a high quality, uniformly coated, curved or flat mirror without sacrificing vision quality.

Referring now to the drawings in greater detail, Figs. 1 and 2 illustrate the first embodiment 10 of the spectrally selective, glare reducing mirror of the present invention adapted for use as an exterior, rearview vehicular mirror. Mirror 10 includes a glass substrate 12 formed from clear, float glass or, alternatively, tinted glass cut to the shape of an exterior rearview mirror, in this case, one adapted for use on the left side of a vehicle. However, an optically clear or tinted plastic substrate formed from polycarbonate, acrylic, polystyrene, allyl diglycol carbonate, styrene acrylonitrile, and/or polysulphone and the like can be used. Preferably, glass substrate 12 has front (or first) and rear (or second) surfaces 12a, 12b which are generally parallel to one another although the invention encompasses glass substrates having nonparallel surfaces forming prismatic elements typically used in day/night rearview mirror applications or on glass surfaces that are non-parallel for other reasons.

A thin layer 14 of transparent, high index, dielectric material, preferably titania (titanium dioxide), is coated on the rear surface 12b of glass substrate 12 to a desired thickness. Thereafter, a very thin metallic layer 16, preferably of a high bulk reflectance metal such as aluminium or silver, is coated on the rear surface 14a of dielectric layer 14. The metal, e.g. aluminium, layer 16 is significantly thinner than prior known metallic layers used in mirror structures and has significant transparency as well as sufficient reflectance to operate in the present invention. A protective coating 18 of light absorbing material such as dark epoxy, urethane, acrylic or other paint or lacquer is applied over the rear surface 16a of metallic layer 16 such that it completely envelops, encloses, seals and protects layers 14, 16 and the rear surface of glass substrate 12, and overlaps the edges of substrate 12 as shown at 18a in Fig. 2.

Both the thin dielectric layer 14 and the very thin metallic layer 16 are preferably applied by vacuum deposition, specifically, magnetron sputtering. Alternatively, processes such as dip-coating, pyrolytic spray deposition, chemical vapour deposition (CVD), thermal or electron beam evaporation, thermal or electron beam reactive evaporation, thermal or electron beam activated reactive evaporation, and/or spin coating processes can also be used, at least for the dielectric layer.

Sputtering methods which are useful to provide the coatings of the present invention include post-magnetron sputtering, rotatable magnetron sputtering and diode and/or triode sputtering. In addition, cathodic arc deposition can also be used. CVD deposition may be a high pressure CVD, atmospheric pressure CVD, atmospheric pressure pyrosol CVD, low pressure CVD, and/or plasma assisted CVD.

In the case of the metallic (aluminium) layer 16, the aluminum may be vacuum deposited by evaporation or sputtering methods. In any event, the specific coating techniques employed are not of great significance when used in the present invention as long as the proper parameters for the dielectric and metallic layers are provided.

With reference to the dielectric layer 14, the glass substrate is preferably coated with a high refractive index ($n > 2.0$) thin film of sputtered, transparent titanium dioxide at a thickness of between about 500 and 700 Å, depending on the desired colour and the exact refractive index of the titanium dioxide. The dielectric refractive index, its dispersion, and coating thickness will have some effect on the luminous reflectance, but for a good quality blue mirror, it is preferred that a refractive index of 2.4 be achieved with titanium dioxide at an optical thickness of about one-quarter of the wavelength of light in the visible wavelength region of the spectrum, namely, a titanium dioxide layer thickness of about 600 to 650 Å. The optical thickness of this layer is the product of the refractive index and the thickness. Thus, for a refractive index of 2.4 and a coating thickness of 600 angstroms the optical thickness is 1440 Å which is one quarter of a wavelength (5760 Å of light that occurs in the yellow/red region of the visible spectrum. Such a coating of titanium dioxide will not usually have a light absorptivity sufficiently large to significantly attenuate light passing through the film. Although titanium dioxide has proven workable in the present invention, other dielectric layers are equally satisfactory for use in the present invention such as tantala, tungsten oxide and others as long as they possess suitable refractive index and light absorptivity properties.

After application of the dielectric layer 14, the highly transparent layer of aluminium or silver 16 is applied over the dielectric layer. At low metallic layer thicknesses, the luminous reflectance is low; however, the reflected spectrally selective colour is strong and quite noticeable to the viewer. As the thickness of the metallic layer (such as aluminium) increases, then spectral selectivity is retained with the mirror appearing blue in reflectance. Also the luminous reflectance rises and is near 50% for aluminium at about 100 Å thick. This thickness is the preferred thickness for mirror 10 shown in Figs. 1 and 2 wherein the multi-layered coating of dielectric and metal is located on the second surface of the transparent glass substrate 12. This aluminium thickness yields excellent luminous reflectivity and colour even though the aluminium is still highly transparent. As the aluminium layer thickness is increased beyond 100 Å, the luminous reflectance continues to rise; however, the spectral electivity that provides the perceived blue colour becomes more faint. Thus, the mirror begins to look more silvery than blue at greater thicknesses of the metallic layer.

The difficulty in simultaneously achieving a desired luminous reflectance level and appreciable spectral selectivity or blueness indicates why prior art mirrors have not used a pure aluminium or silver metal deposited in a substantially opaque layer. Such mirrors will not provide the levels of luminous reflectance which are required to achieve the desired results in vehicles. Other prior art mirrors have not employed thinner thicknesses of metals such as aluminium or silver because of the substantial transparency which occurs with such thicknesses. Yet, it is precisely such transparency which can allow the mirrors of present invention to provide the desired luminous reflectance levels while meeting minimum reflectance standards. Indeed, several known first surface spectrally selective mirrors use opaque or near opaque layers of metals like chromium (Cr) and titanium (Ti). However, for second surface spectrally selective mirrors, metals like chromium (Cr) and titanium (Ti) yield mirrors with luminous reflectances below minimum standards.

The invention will now be described, by way of example only, with reference to the accompanying drawings, in which:

Fig. 1 is a front prospective view of a first embodiment of a spectrally selective, glare reducing mirror of the present invention;

Fig. 2 is a section of the mirror of Fig. 1 taken along plane II-II;

Fig. 3 is a graph of the spectral response against wavelength for a prior art mirror and several mirrors of the present invention a 650 Å thick dielectric layer of titanium dioxide of refractive index 2.4 and various thicknesses of aluminium ranging from 0 to 500 Å;

Fig. 4 is a graph of the luminous light transmittance against thickness of aluminium layers between 0 and 500 Å on glass without any other coatings;

Fig. 5 is a graph of spectral reflectance against wavelength for a commercially available, first surface blue mirror and a second surface mirror (as in Fig. 1) of the present invention in the visible regions of the spectrum;

Fig. 6 is a graph of spectral reflectance against wavelength of the mirror of Fig. 1 having a titanium dioxide dielectric layer of 600 Å thick and an aluminium layer 100 Å thick covered with a protective coating of flat black enamel spray paint on previously bent soda-lime glass;

Fig. 7 is a graph of a spectral reflectance against wavelength according to a mirror of the present invention having a titanium dioxide dielectric layer 600 Å thick, a metallic aluminium layer of 100 Å thick followed by a spray coating of black epoxy paint, the dielectric layer having been coated on flat sheet glass followed by heating, bending and the application of the metallic and paint layers thereafter in accordance with the method of the present invention;

Fig. 8 is a section of a second embodiment of a mirror of the present invention incorporating a multi-layer first surface coating;

Fig. 9 is a graph of a spectral reflectance against wavelength of the mirror of Fig. 8 incorporating a 600 Å thick dielectric layer of titanium dioxide, and an 80 Å thick layer of aluminium on the first surface of a glass substrate;

Fig. 10 is a graph of a spectral reflectance against wavelength of a mirror similar to that of Fig. 8 having a 600 Å thick dielectric layer of titanium dioxide and a 79 Å thick layer of silver on the first surface of a glass substrate;

Fig. 11 is a section of a third embodiment of the present invention incorporating two thin dielectric layers and a very thin metallic layer;

Fig. 12 is a graph of spectral reflectance against wavelength of the mirror of Fig. 11;

Fig. 13 is a section of a fourth embodiment of a mirror of the present invention incorporating four thin dielectric layers and a very thin metallic layer; and

Fig. 14 is a graph of spectral reflectance against wavelength of the mirror of Fig. 13.

The following Examples are provided by way of example, and are given by way of illustration and are not to be construed as being limiting on the invention.

## COMPARATIVE EXAMPLES A, F and G and EXAMPLES B, C, D and E

In Fig. 3, the spectral response calculated for prior art mirrors and mirror 10 of the present invention are shown wherein the mirror has a dielectric layer 14 of titanium dioxide having a refractive index of about 2.4 and a coating thickness of 650 Å. various thicknesses of aluminium layer 16 (A to G) to the rear of such a dielectric layer 14 are shown in Fig. 3, namely 0 Å (A), 25 Å (B), 50 Å (C), 75 Å (D), 100 Å (E), 200 Å (F) and 500 Å (G).

The curve labelled 0 Å (Comparative Example A) is for titanium dioxide on glass alone and shows little spectral selectivity and a low overall reflectance. For 25 Å of aluminium (Example B), a better spectral selectivity is obtained where the reflectance peaks near 480 nanometres (nm) in the blue region of the spectrum and drops significantly toward the red end of the spectrum at about 700 nm. However, the overall reflectance for the 25 Å thick aluminium layer is only about 34% when measured using SAE recommended practice J964a, which uses Standard Illuminant A as source and a photopic or daytime adapted eye response detector.

The 500 Å thick aluminium layer (Comparative Example G) shown in Fig. 3 is opaque or nearly so, and provides a comparison for spectral selectivity and overall reflectance. The curve for aluminium 100 Å thick (Example E) is preferred because it has a luminous reflectance of about 51.5%, well above the 35% required under known governmental standards. It also has an excellent spectral selectivity as shown by the higher reflectance at the blue portions (near 400 nm) as compared to the red portions (near 700 nm) of the spectrum.

For comparison, Fig. 3 also shows a dashed curve which is computed for a commercially available blue mirror marketed by Donnelly Corporation of Holland, Michigan under the name "BLUE MIRROR" using a multi-layer coating having a nearly opaque metal layer therein. When the dashed curve is compared with the curve for the mirror of Fig. 3 having aluminium 100 Å thick, a very close match in optical response is demonstrated between the present invention and the commercially acceptable prior "BLUE MIRROR" mirror.

As will now be apparent, the metallic layer 16 formed from aluminium or silver can have a variety of thicknesses and yet may satisfy the requirements that luminous mirror reflectance be above 35% and that there be consumer appreciable spectral selectivity such that the mirror appears blue. The 35% reflectance level is obtained with aluminium about 28 Å thick while spectral selectivity begins to decrease when aluminium about 133 Å thick is used. Depending on the type and properties of the dielectric layer 14, metal layer 16 and substrate 12, a metallic layer thickness range of from 25 to 150 Å can provide the desired qualities for the mirrors of this invention.

With reference to Fig. 4, the transparency of the various thicknesses of aluminium for the metallic layer are shown by illustrating a calculation of the percentage transmittance of light against the aluminium thicknesses from 0 to 500 Å on glass. As will be apparent from Fig. 4, a 25 Å thick aluminium layer on glass yields a luminous light transmittance of about 63%, an 80 Å thick aluminium layer yields a transmittance of about 22% while aluminium 133 Å thick on glass provides a transmittance of about 9%. The preferred thickness of about 100 Å of aluminium on glass transmits about 16% of incident light which is relatively highly transparent.

The final layer 18 of protective, light absorbing material both protects layers 14 and 16 and absorbs light which is transmitted through the substrate 12, the dielectric layer 14, and the metallic layer 16. Since the desired luminous reflectance and spectral selectivity can be achieved without this final layer 18 through the use of the dielectric and significantly transparent metallic layers, should light be transmitted through those various layers and reflected off an object behind the mirror and returned toward the viewer, such returned light contributes to the overall mirror appearance, and the mirror function could thereby be compromised. Therefore, layer 18 provides an absorbing layer for all or most of the light transmitted through the various mirror layers, and preferably absorbs uniformly across all visible wavelengths of light. Alternatively, layer 18 may absorb most transmitted light but selectively reflects light in the blue wavelength region. One material found suitable to provide such absorption characteristics while providing adequate protection from exposure of the mirror to moisture, salt spray and other environmental elements is black epoxy spray paint such as Rust Oleum black epoxy paint No. 7886 available from Rust Oleum Corp. of Vernon Hills, Illinois. The protective, light absorbing layer 18 can be a paint or lacquer which can be applied by a variety of means including spraying, curtain-coating and roller-coating.

Using coloured paints for layer 18 can also enhance the spectral selectivity of the mirror by additionally reflecting certain portions of the transmitted light back to the viewer. For example, a blue paint tends to make the mirror look bluer while a yellow paint tends to detract from the blue appearance. Therefore, selection of the paint can be important for both the spectral selectivity and environmental protection. Blue paint such as Now™ spray paint royal blue No. 21207 available from Illinois Bronze Paint Co., Lake Zurich, Illinois, or Rust Oleum Metal Saver™, blue sapphire No. 7884 can be used in place of the black enamel or epoxy paint.

## EXAMPLE H and COMPARATIVE EXAMPLE I

With reference to Fig. 5, the graph shows the spectral reflectance of a mirror of the present invention (Example H) as compared to a commercially available, first surface blue mirror described above in connection with Fig. 3 (Comparative Example H). The dashed line curve represents the commercially available, first surface, blue mirror. The solid line represents mirror 10 of the present invention a having 600 Å thick layer of titanium dioxide having a refractive index of 2.4, a 100 Å thick layer of aluminium and a layer of Rust Oleum No. 7886 paint. Spectral selectivity is clearly evident by the difference in reflectance at 450 nm from that at 700 nm in both mirrors. Both mirrors appear blue in colour and have luminous reflectances of 45.6% and 43.8%, respectively, which fall within the desired range of 35% to 60%.

## EXAMPLE 1

A first example of the mirror of the present invention was made using a piece of 0.093 inch thick soda-lime glass initially bent before coating to a 100 cm (40 inch) uniform radius to provide a substrate for a convex rearview mirror. Bending was carried out by heating the glass to a temperature exceeding 450°C. followed by bending to the desired radius in a conventionally designed bending mould. The bent glass was then cut to the shape of an outside rearview mirror shown in Fig. 1 herein.

After washing by conventionally known, standard glass substrate washing methods, the bent glass piece was placed in a vacuum sputter coater having both titanium and aluminium sputter cathodes mounted for use. With the glass positioned away from the deposition region, the titanium cathode was conditioned to operate in a reactive sputtering mode. The sputtering gas was pure oxygen at a pressure of 2.1 mTorr. When the cathode stabilized, the glass was passed underneath the sputter coater so as to produce a titanium dioxide coating of the thickness of about 600 angstroms within an accuracy of +/- 20 Å. The titanium dioxide had a refractive index in the visible region of the spectrum of about 2.4 to 2.5, meaning that the 600 Å thickness corresponded approximately to a quarter wavelength optical thickness of light in the visible region of the spectrum.

The coated bent glass was then moved away from the cathode region again, while maintaining the vacuum in the coater and while shutting off the oxygen gas. The aluminium target was then conditioned to operate in the metallic deposition mode using inert argon as the non-reactive sputter gas at a pressure of 2 mTorr. Aluminium was then coated to a thickness of 100 Å within an accuracy of about +/- 20 Å by passing the coated substrate beneath the aluminium cathode. The thicknesses of the films being coated in the sputter coater were adjusted by changing the substrate carrier speed.

After such vacuum deposition, the coated glass was removed from the sputter chamber and the coated side was sprayed with a flat black enamel spray paint such as Rust Oleum flat black spray enamel to provide a protective, light absorption coating. The paint was allowed to overlap the edges somewhat to provide extra protection from edge corrosion.

With reference to Fig. 6, the spectral reflectance of the mirror is shown having a luminous reflectance (per SAE recommended practice J964a) of 38.6%. Spectral selectivity is illustrated by the peak in the reflectance at the shorter wavelengths between 400 and 450 nm in the blue visible portion of the spectrum as compared to the much reduced reflectance at the longer wavelengths in the red portion of the visible spectrum. The luminous reflectance is at a level acceptable for some automotive applications which require a blue, antidazzling, glare reducing exterior rearview mirror having greater than 35% luminous reflectance.

## EXAMPLE 2

In a second example, a method of the present invention was used to overcome the manufacturing disadvantage of coating individual mirrors using the relatively slow rate of planar magnetron sputtering of titanium dioxide as a dielectric layer. The mirror was manufactured by coating a large, flat glass sheet with a dielectric layer of titanium dioxide followed by bending the dielectric coated glass sheet to a desired uniform radius, multi-radius or non-uniform curvature or, alternatively, cutting the large, coated glass sheet to individual rearview mirror size followed by bending. By coating the flat glass sheet with titanium dioxide before bending, a more uniform thickness layer is achieved thereby providing a more precise blue mirror colour which is principally dependent on the thickness of the titanium dioxide layer. Moreover, large sheets of glass may be coated with the titanium dioxide, then stored. As orders for mirrors are received, the glass may be left flat or bent as needed.

Specifically, in Example 2, a flat glass sheet of linear dimension 24.8 cm (9.75 inches) by 68.6 cm (27 inches) was first coated with titanium dioxide to a thickness of 600 Å using the sputter method set forth above in Example 1. The titanium dioxide coated glass was then heated and bent to a 101.6 cm (40 inch) radius curvature as also set forth above in Example 1. The bending required heating to a temperature in excess of 450°C. It was found that the heating changed the refractive index of the dielectric layer so little as to be insignificant. The coated, bent flat glass sheet was then cut to individual rearview mirror sizes followed by subsequent washing and sputter coating of the very thin metallic aluminium layer to a thickness of about 100 Å over top the sputter coated titanium dioxide layer. Metallic aluminium is significantly easier to sputter coat and achieves uniform thickness even though the coated glass substrate is curved or bent as compared to coating titanium dioxide on a bent glass substrate. Following coating of the coated glass with aluminium, the mirror was removed from the sputtering chamber and spray coated with black epoxy paint, namely, Rust Oleum No. 7886 gloss black epoxy spray paint to provide both light absorption and environmental protection.

The spectral reflectance of the mirror produced in Example 2 is shown in Fig. 7 and has a luminous reflectance of approximately 42.6% and again shows excellent spectral selectivity by enhancing reflectance in the blue visible regions of the spectrum while decreasing the reflectance in the longer red regions of the spectrum.

Typically, the driver-side mirror on automobiles is not curved but rather is flat. To produce these flat mirrors, the process outlined in Example 2 can be followed except that the glass is not bent. Such processing to produce flat or curved spectrally selective rearview mirrors has distinct advantages including economy of production of second surface mirrors such as is illustrated for mirror 10 in Fig. 1. Large areas of flat glass of 152 x 152 cm (60 x 60 inches) or greater dimension can be coated with the dielectric layer 14. This can be achieved in a variety of coating means with high rate reactive sputtering in processes developed for economical coating of large glass areas being particularly suitable. Multiple cathodes can be used to increase throughput and, because only the one dielectric layer is being deposited at this stage of the manufacturing process, the coating conditions such as sputter rates and gas flows and compositions can be optimized without being concerned with deposition of the metal layer 16. Also, the substrate 12 can be heated without concern for degradation, modification or any other effect on the metal layer 16. By coating and then stocking large area glass sheets with the dielectric layer 14, subsequent cutting of mini-lites for bending or rearview mirror shapes for bending and/or continued processing while flat can be highly efficient with minimum cullet. If curved mirrors are desired, mini-lites or actual rearview shapes can be easily cut from the flat stock sheets using a variety of conventional cutting machines developed for cutting from flat glass sheets. Mini-lites or shapes to be bent are then sent through a bending process. Once the now bent or flat mini-lites or shapes have been so prepared, they can be coated with the thin metallic layer 16 in a process optimized for this purpose. After coating with metallic layer 16, protective coating 18 can be applied. Preferably, the dielectric coated glass sheet is shape-cut and metallic layer 16 is coated prior to applying protective coating 18 so that this protective coating can wrap-around, envelop, protect and seal the edge regions of the rearview mirror and so prevent environmental attack and edge corrosion.

The above method is particularly suited to in-line, sequential processing. Large glass sheets can be loaded onto a conveyor and washed in a glass cleaning unit that utilizes detergent-assisted face cleaning, clean, deionized water rinsing and drying using air knives. This cleaned glass can be loaded into an in-line sputter coater where about 650 Å of titanium dioxide is deposited using high rate reactive sputter deposition. Upon exiting this sputter chamber, the now dielectric coated large glass sheets are cut into mini-lites or into shapes. Those destined for bending are diverted to a bending process and return to the line in their bent form. The parts are next washed again and enter an aluminizing chamber where about 100 Å of aluminium is deposited. Upon exit from this aluminizing chamber, those parts in mini-lite form are cut to rearview mirror shapes. The now dielectric coated/aluminized shapes enter a curtain coater where the protective coating of black epoxy paint is applied. The shapes pass through a baking station and the final product is packed for customer use.

Other variations of the mirror of Example 2 were made using different light absorbing, protective coatings on the rear surface. For example, in one sample, Rust Oleum blue epoxy paint No. 7884 was used as a coating 18 while on a substantially identical mirror a black epoxy Rust Oleum paint No. 7886 was used. The aluminium and titanium dioxide thicknesses were the same on both mirrors. The resulting luminous reflectance and perceived colours of those two mirrors did not visibly distinguish one from the other. Thus, although there was no consumer appreciable effect from the substitution of this particular blue for the black paint, there was also no deleterious effect. Yet, when the black paint was replaced with a yellow glossy spray paint, namely, Rust Oleum No. 7744, the resulting mirror was yellow in reflectance due to the transparency of the 100 Å thick aluminum layer. In this example, the titanium dioxide quarter wave coating could not provide sufficient blueness to overcome the strong yellow colour from the paint. Hence, the mirror looked yellow.

In both Examples 1 and 2, the aluminium layer alone deposited on the glass yielded an 18% luminous transmittance corresponding to a thickness of about 95 to 100 Å according to Fig. 3 thereby agreeing with the design thickness calculated at 100 Å.

## EXAMPLE 3

Referring now to Figs. 8 through 10, a second embodiment 20 of a spectrally selective mirror of the present invention (termed a "first surface" mirror) is illustrated. The mirror 20 has a substrate 22 also having generally parallel front and rear surfaces but including a very thin metallic layer 24 coated on its front surface 22a. Applied over the front surface 24a of the metallic layer 24 is a thin layer 26 of dielectric material, preferably titanium dioxide. The dielectric layer 26 is thus the closest layer to the source of light to be reflected incident on the mirror as shown by the arrow in Fig. 8. In this form, if the substrate 22 is made from transparent glass or other transparent material, it is preferred to incorporate a coating 28 of light absorbing material on the rear substrate surface 22b. Coating 28 is preferably black or blue epoxy paint as described above in connection with embodiment 10. When included, layer 28 absorbs most or all of the light that is transmitted through the dielectric and metallic layers 26 and 24 and into the glass substrate 22. Alternatively, however, a highly absorbing opaque substrate may be substituted for substrate 22 such that light passing through layers 26 and 24 is absorbed by the substrate 22 without the necessity of including layer 28. For example, a black ceramic tile could be used.

In the (first surface) mirror of Fig. 8, a metallic layer 24 is preferably formed from aluminium and has a thickness of about 80 Å which is somewhat less than the 100 Å preferred thickness for the "second surface" type mirror of Figure 2. The preferred titanium dioxide layer thickness of mirror 20 is 600 Å just as in Examples 1 and 2.

The spectral selectivity and reflectance for the mirror 20 in Fig. 8 is shown in Fig. 9 and includes a spectral reflectance exceeding 60% at 380 to 460 nm and near 2% at the longer wavelengths at 780 nm. Likewise, the luminous reflectance is 42% for aluminium 79 Å of thick.

The first surface mirror 20 of Fig. 8 may provide a cost effective alternative to typical first surface spectrally selective mirrors using opaque or near opaque metal layer designs. The prior known opaque metal layer designs typically use chromium or titanium metals or special alloys of copper and aluminium, all of which are expensive and must be coated to thicknesses of several hundred Å. By contrast, first surface mirror 20 may require only a fraction of such thicknesses for its metal layer and the material may be less expensive if one employs relatively common aluminum.

However, in place of the aluminium layer 24, other high bulk reflectance metals can be used. Again, such metals are typically deposited in substantially transparent layers generally in the range of 50 to 100 Å. For example, silver may be used typically in a thickness of 50 to 100 Å in such a first surface construction to provide a luminous reflectance of 39% to 46% of incident light. Silver often does not provide as much spectral selectivity as aluminium. However, as shown in Fig. 10, a silver layer 70 Å thick provides a spectral reflectance of about 16% at a wavelength of 780 nm and about 46% between 460 and 500 nm. The resulting luminous reflectance with silver as layer 24 is about 42% or very similar to that of the aluminium layered first surface mirrors. In each case, the dielectric layer was 600 Å thick and formed from titanium dioxide.

In order to provide a luminous reflectance for mirror 20 of at least 35% with good spectral selectivity, the thickness of aluminium metal layer 24 is desirably between 40 and 115 Å. However, when silver is used, the thickness is preferably from 25 to 135 Å. Such thicknesses for both metals are substantially transparent, i.e., not opaque and not near opaque.

## EXAMPLE 4

Although it is practical and preferable to use a single dielectric layer in combination with a single high transparency metallic layer to achieve the desired luminous reflectance and spectral selectivity properties, combinations of more than one dielectric layer with a single high transparency metallic layer are also possible. Fig. 11 shows a third embodiment of the invention which is a mirror 10′ where a second dielectric layer 14′ is deposited onto the first (front) surface of substrate 12. Dielectric layers 14 and 14′ are typically the same thickness and made of the same material. The spectral performance of a mirror formed according to the construction of Fig. 11 where layer 14 and 14′ are titanium dioxide 600 Å thick of refractive index about 2.4 and where layer 16 is a 100 Å thick film of aluminium is given in Fig. 12.

Manufacture of the mirror shown in Figs. 11 and 12 is particularly economical if the titanium dioxide layers are deposited by the dip and fire technique wherein the substrate is dipped into a solution of an appropriate precursor of titanium dioxide which has been dissolved in a suitable solvent. For example, a solution formed by dissolving titanium isopropoxide in ethanol can be used. Upon withdrawal from this solution, the solution evenly wets both surfaces, first and second, of the substrate. This coating on the first and second surfaces is then fired in an oven at 450°C., or thereabouts, to complete hydrolysis and condensation and to densify the newly formed oxide coating. If curved glass is desired, either with a dipped-coating or dip/fire oxide coating, it can be bent in a conventional bending process. Once oxide coatings 14, 14′ are so formed by this non-vacuum, dip/fire process, the thin metallic layer 16 can be deposited in a vacuum process as previously described.

## EXAMPLE 5

A further construction is shown in Fig. 13 which is a fourth embodiment of the present invention. Here rather than using a single dielectric layer, the first and second surfaces of substrate 12 on mirror 10″ are dip-coated with a two-layer stack 14, 14c and 14′, 14d of a lower index/high index combination. Layers 14, 14′ are first dip-coated as described above for mirror 10′. Thereafter, layers 14c, 14d are dip-coated from an appropriate precursor of silicon dioxide dissolved in a suitable solvent, i.e., ethanol. Mirror 10″, from the front, consists of the following layers:

14d: 1000 Å of silicon dioxide of Refractive Index 1.45
14′: 600 Å of titanium dioxide of Refractive Index 2.4
12 : 0.236 cm (0.093 inches) soda lime glass
14 : 600 Å of titanium dioxide of Refractive Index 2.4
16 : 100 Å of aluminium
14c: 1000 Å of silicon dioxide of Refractive Index 1.45

The spectral selectivity of the mirror illustrated in Fig. 14 can be good.

The above examples demonstrate the potential value of using the dip-coating process, or of tailoring the spectral response of the coating by using a plurality of dielectric layers, albeit at the expense of manufacturing complexity.

While several forms of the invention have been shown and described, other forms will now be apparent to those skilled in the art. Therefore, it will be understood that the embodiments shown in the drawings and described above are merely for illustrative purposes, and are not intended to limit the scope of the invention.

## Claims

1. A mirror comprising a substrate having a front and rear surface and a multi-layer coating provided on the substrate, the coating comprising a layer of transparent, dielectric material and a layer of metal, at least one of the metal or dielectric layers being applied directly to the substrate, the metal layer having a thickness of from 25 to 150 Å and the layer of dielectric material being positioned closest to a source of incident light to be reflected by the mirror.

2. A mirror according to claim 1 wherein the substrate is transparent, the dielectric layer is located to the rear of the substrate surface and the metal layer is located to the rear of the substrate and dielectric layer.

3. A mirror according to claim 1 wherein the metal layer is located to the front of the substrate surface and the dielectric layer is in front of the metal layer.

4. A mirror according to any of claims 1, 2 or 3 wherein the metal layer comprises aluminium and/ or silver.

5. A mirror according to any of claims 1 to 4 wherein the metal layer has a luminous light transmittance of from 9% to 63% and/or the mirror has a luminous light reflectance of from 35% to 60%.

6. A mirror according to any of claims 1 to 5 wherein the metal layer comprises aluminium having a thickness of about 80 Å having a luminous reflectance of greater than 35%.

7. A mirror according to any of claims 1 to 6 wherein the dielectric layer has an index of refraction of at lest 2.0 and/or has an optical thickness of one-quarter wavelength of length in the visible region.

8. A mirror according to any of claims 1 to 7 wherein the dielectric layer comprises titanium dioxide, such as having an index of refraction of about 2.4, and/or an optical thickness of about 1440 Å.

9. A mirror according to any of claims 1 to 8 wherein the substrate is transparent and has a coating of light absorbing material on its rear surface.

10. A mirror according to any of claims 1 to 8 wherein the substrate is opaque and/or highly light absorbing.

11. A mirror according to any of claims 1 to 5 wherein the metal layer comprises aluminium having a thickness of about 100 Å and a luminous light transmittance of about 16% and/or the mirror has a luminous light reflectance greater than 35%.

12. A mirror according to any of claims 1 to 11 wherein the dielectric layer has a thickness of from 500 - 700, such as 600 to 650, Å.

13. A mirror according to any of claims 1 to 12 having a protective coating of light absorbing material provided over the metal layer, the light absorbing material absorbing light uniformly in all visible wavelengths.

14. A mirror according to any of claims 1 to 13 wherein the dielectric layer comprises titanium dioxide, tantala and/or tungsten oxide.

15. A mirror according to any of claims 13 or 14 wherein the protective coating is a layer of paint or lacquer and/or is blue or black.

16. A mirror according to any of claims 1, 2 and 4 to 15 having a second layer of dielectric material, the second layer being located to the front of the substrate surface.

17. A mirror according to claim 16 wherein the two layer of dielectric material are formed from the same material and have substantially the same thickness, such as the two layers of dielectric material being formed from titanium dioxide, each having a thickness of about 600 Å and a refractive index of about 2.4.

18. A mirror according to claim 16 having third and fourth layers of dielectric material, the third layer being located over and in front of the second dielectric layer, the fourth layer being located over the metal layer to the rear thereof.

19. A mirror according to claim 18 wherein the first two layers of dielectric material comprise titanium dioxide, such as each having a thickness of about 600 Å and a refractive index of about 2.4, the third and fourth layers comprising silicon dioxide, such as each having a thickness of about 1000 Å and a refractive index of about 1.45.

20. A method of manufacturing a mirror, the method comprising providing a multi-layer coating on a substrate having a front and rear surface the coating comprising a layer of transparent, dielectric material and a layer of metal, at least one of the metal or dielectric layers being applied directly to the substrate, the metal layer having a thickness of from 25 to 150 Å and the layer of dielectric material being positioned closest to a source of incident light to be reflected by the mirror.

21. A method according to claim 20 comprising:
(1) providing a substrate having a front and rear surface;
(2) coating one surface of the substrate with a layer of dielectric material to a desired thickness;
(3) heating the substrate to a temperature sufficient to allow bending of the coated substrate;

(4) bending the heated, coated substrate to a desired curvature; and

(5) coating the bent, coated substrate, over the layer of dielectric material, with a layer of metal having a thickness of from 25 to 150 Å.

**22.** A method according to claim 21 which includes coating the substrate with titanium dioxide.

**23.** A method according to any of claims 20 to 22 wherein providing the dielectric coating includes vacuum sputter coating the substrate with titanium dioxide using a titanium cathode in an atmosphere of oxygen.

**24.** A method as claimed in claim 22 or 23 wherein the dielectric coating is to a thickness of from 500 to 700 Å.

**25.** A method according to any of claims 20 to 24 wherein the metal layer comprises aluminium to a thickness of about 100 Å.

**26.** A method according to any of claims 21 to 25 wherein the heating and bending comprises heating the dielectric coated substrate to a temperature exceeding 450°C followed by bending the heated, coated substrate in a mould.

**27.** A method according to any of claims 20 to 26 including coating the metal layer with a layer of light absorbing material.

**28.** A method according to any of claims 20 to 27 wherein providing the dielectric material includes dipping the substrate in a precursor of the dielectric material dissolved in a solvent such that both the front surface and rear surface of the substrate are wetted with the solution, and firing the wetted substrate to a temperature sufficient to reduce the solution on the surfaces to an oxide, thereby forming the dielectric material.

**29.** A method according to claim 28 wherein the coatings are performed with in-line processing such that the coatings occur in processing units which are positioned.

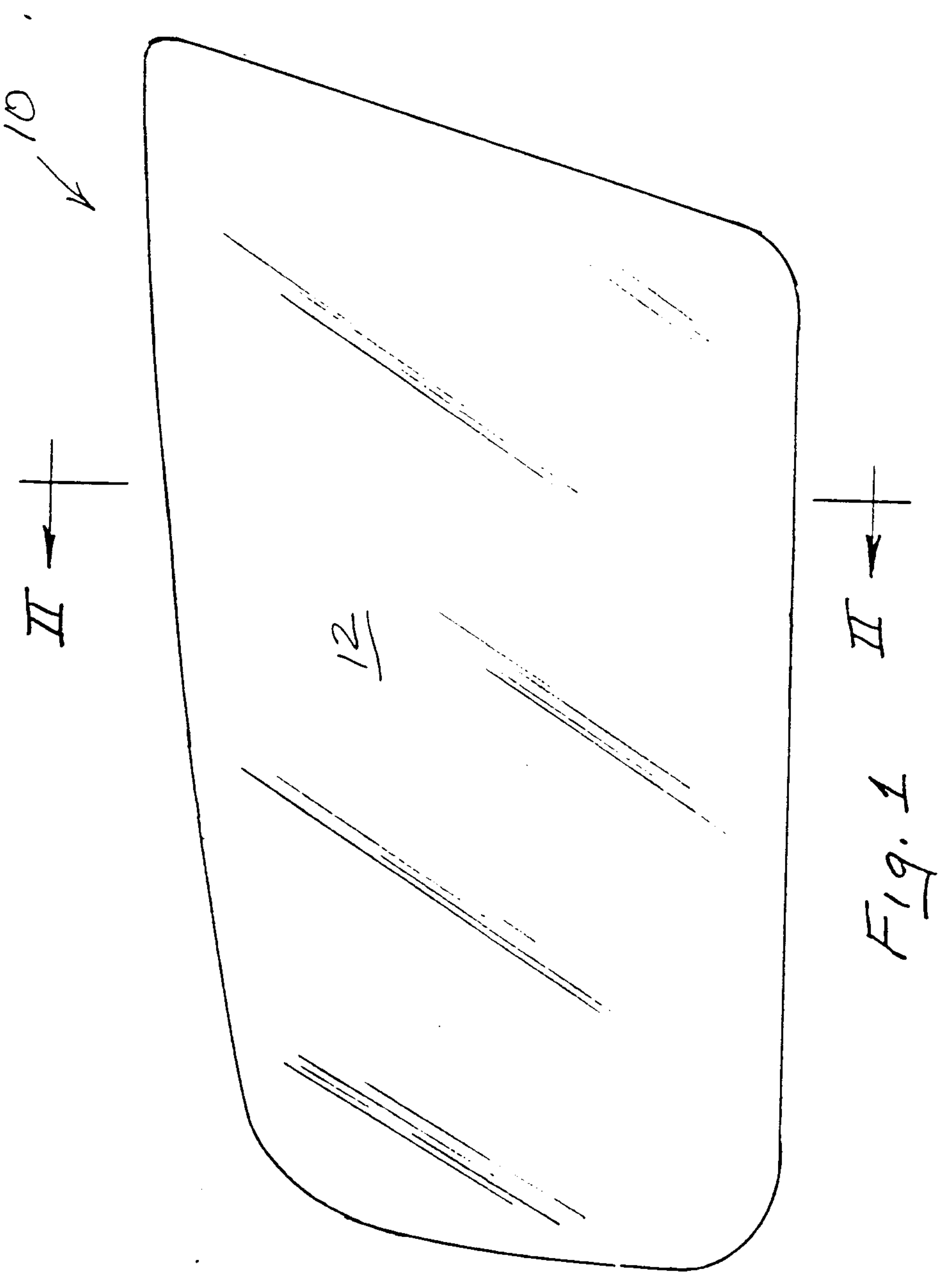


Fig. 1

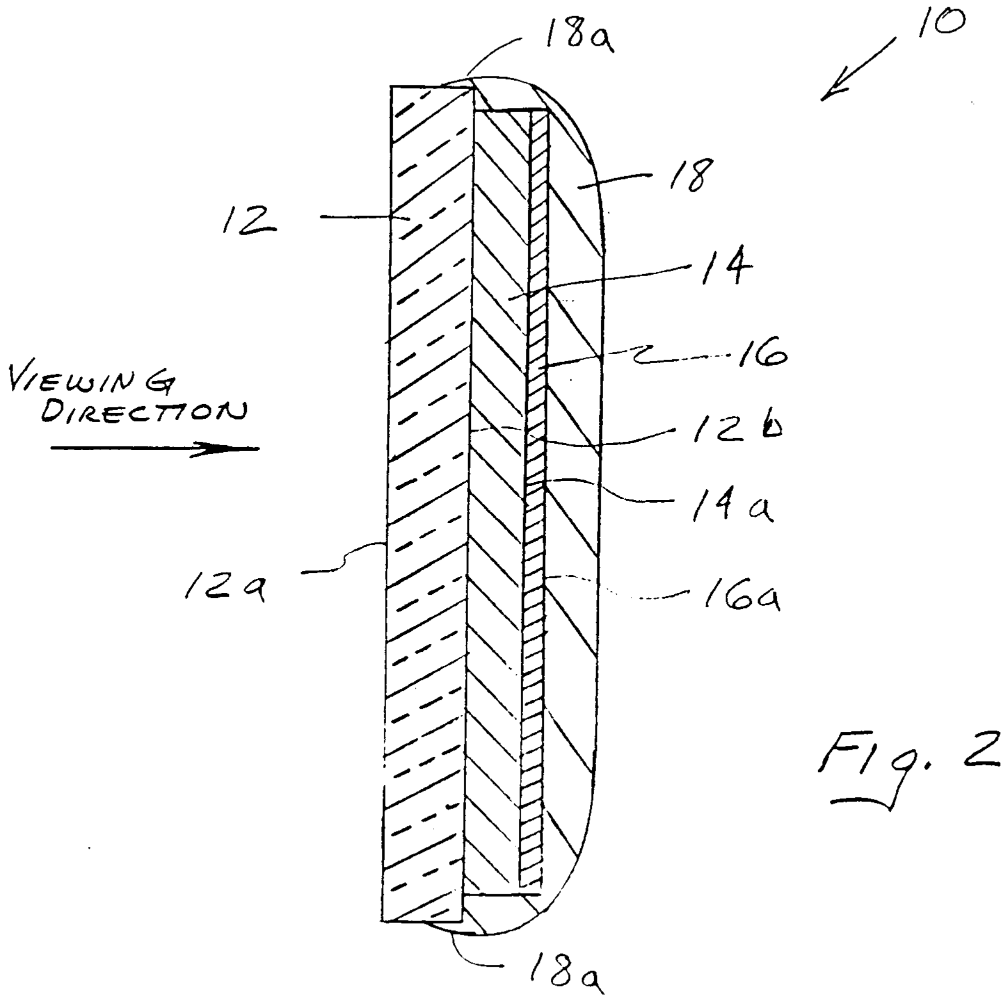


Fig. 2

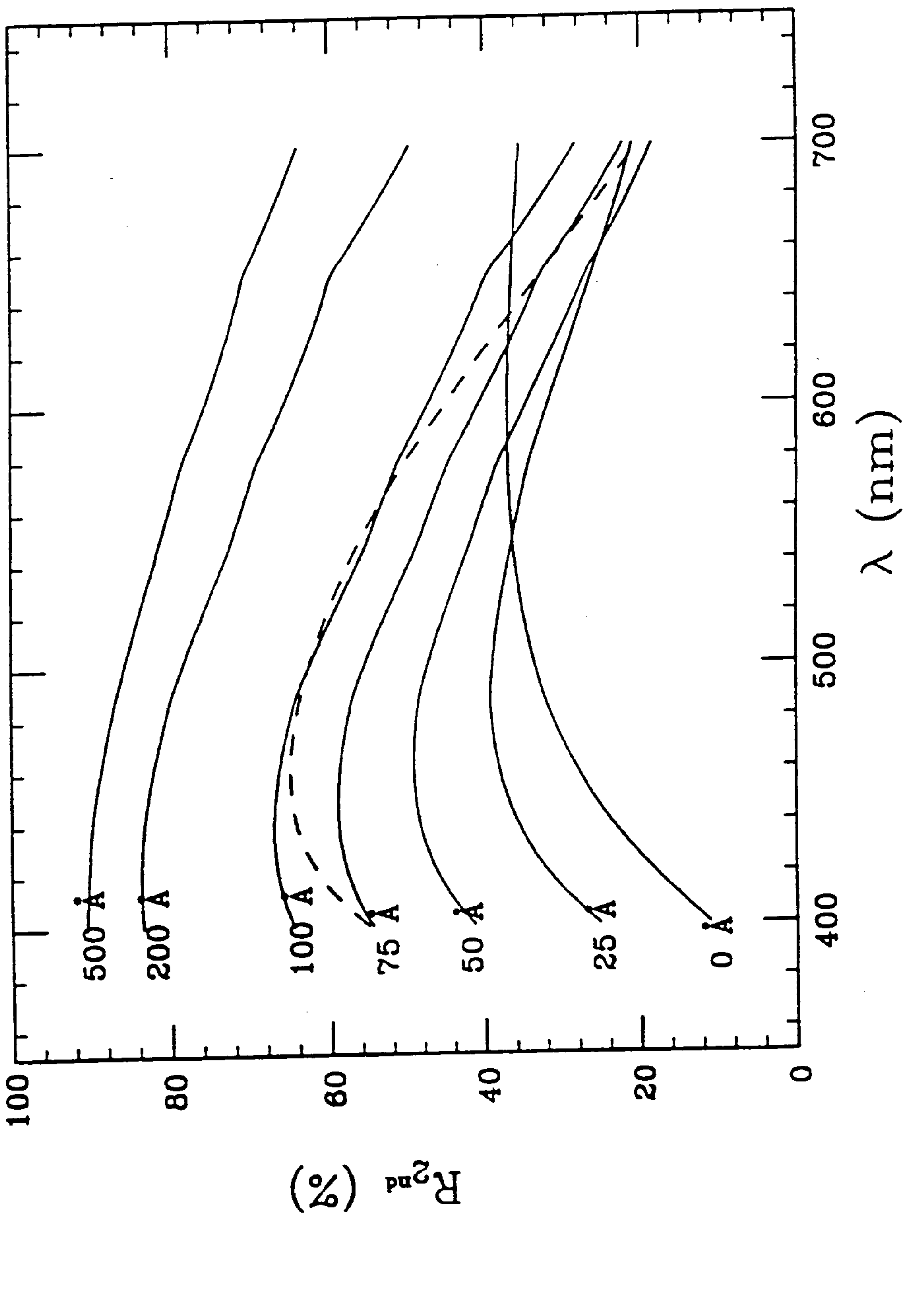
100
80
60
40
20
0
$R_{2nd}$ (%)
400
500
600
700
λ (nm)
500 Å
200 Å
100 Å
75 Å
50 Å
25 Å
0 Å

Fig. 3

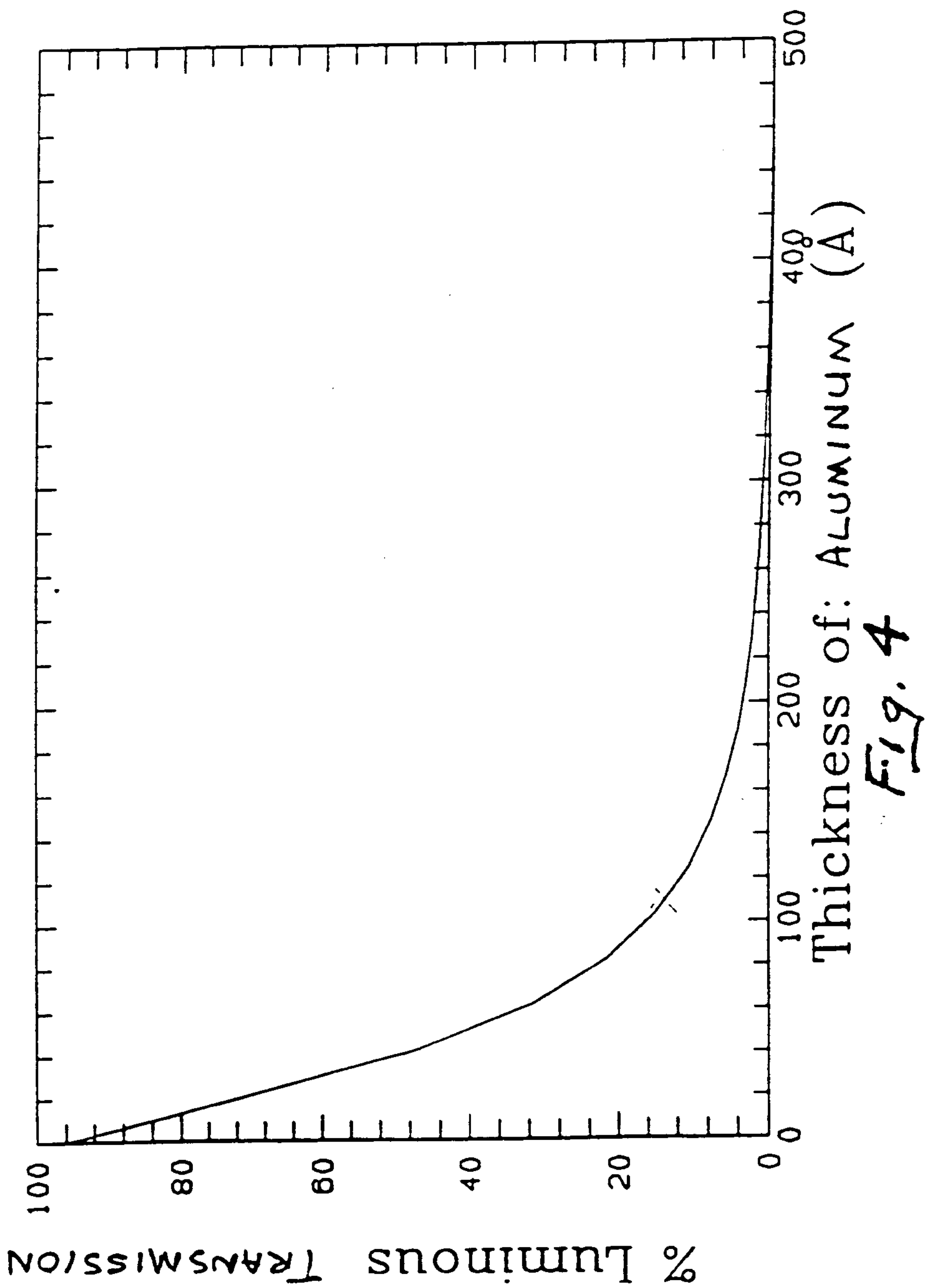
% Luminous Transmission
100
80
60
40
20
0
0
100
200
300
400
500
Thickness of: Aluminum (Å)

Fig. 4

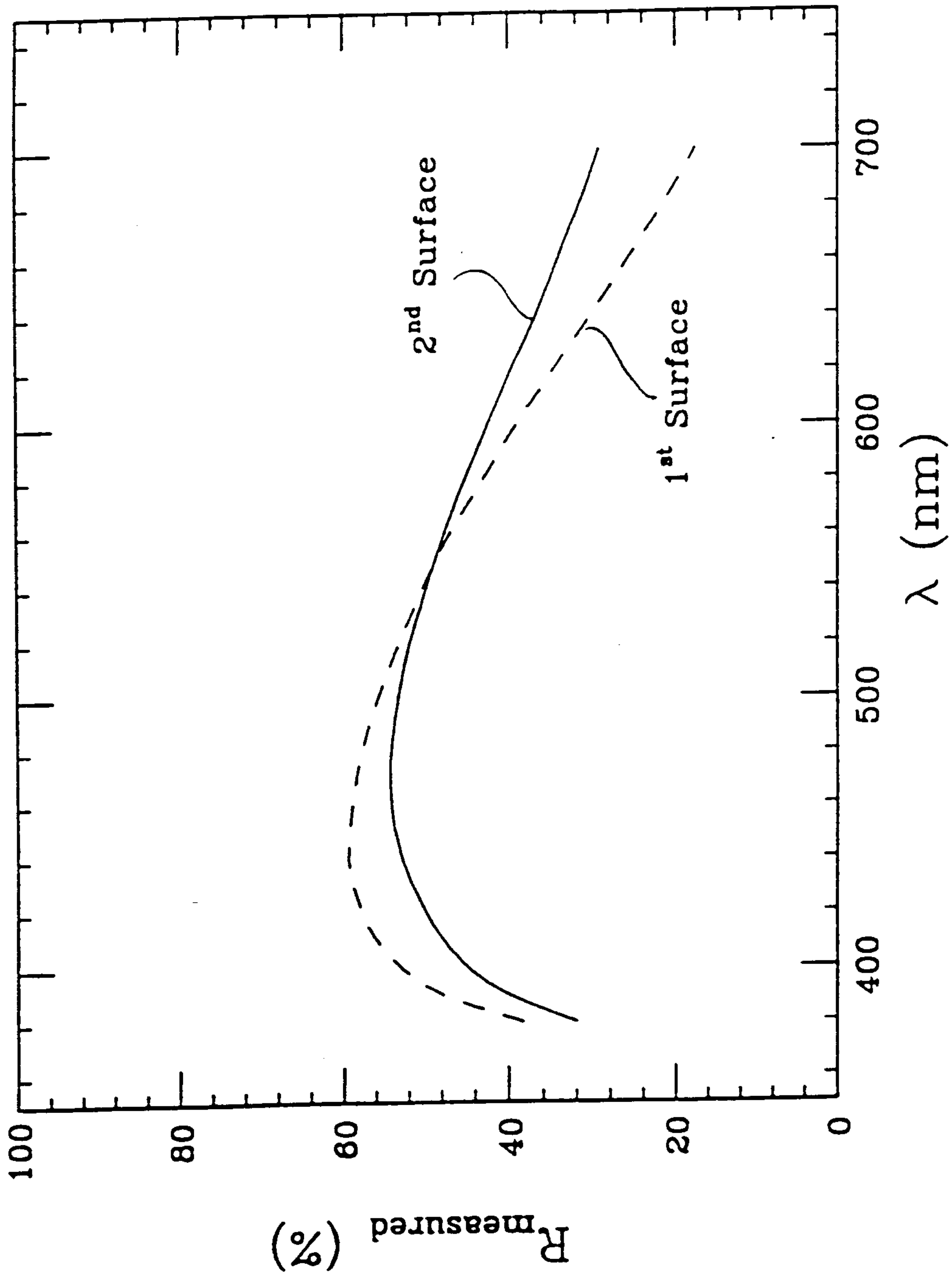
100
80
60
40
20
0
$R_{measured}$ (%)
400
500
600
700
λ (nm)
$2^{nd}$ Surface
$1^{st}$ Surface

Fig. 5

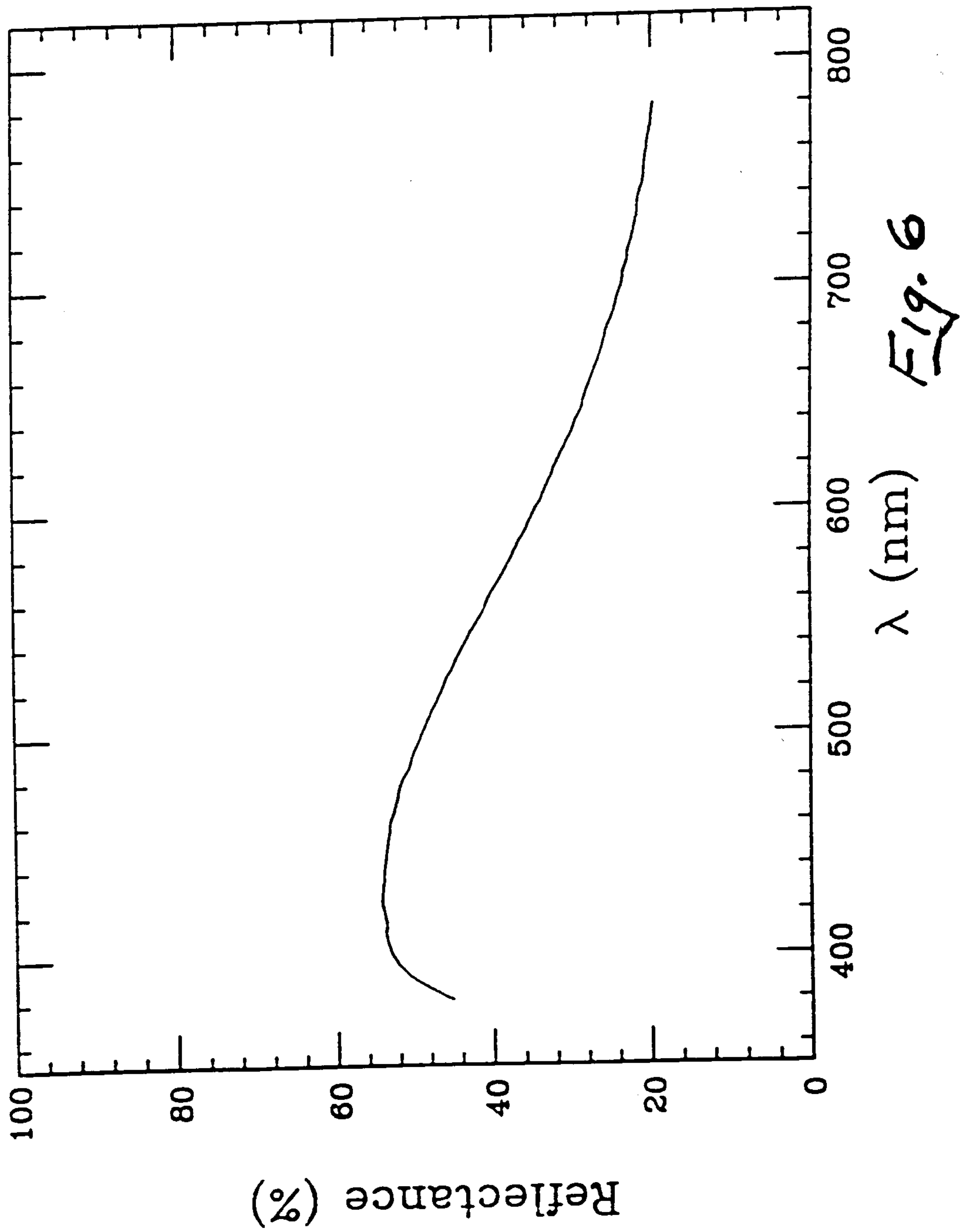


Fig. 6

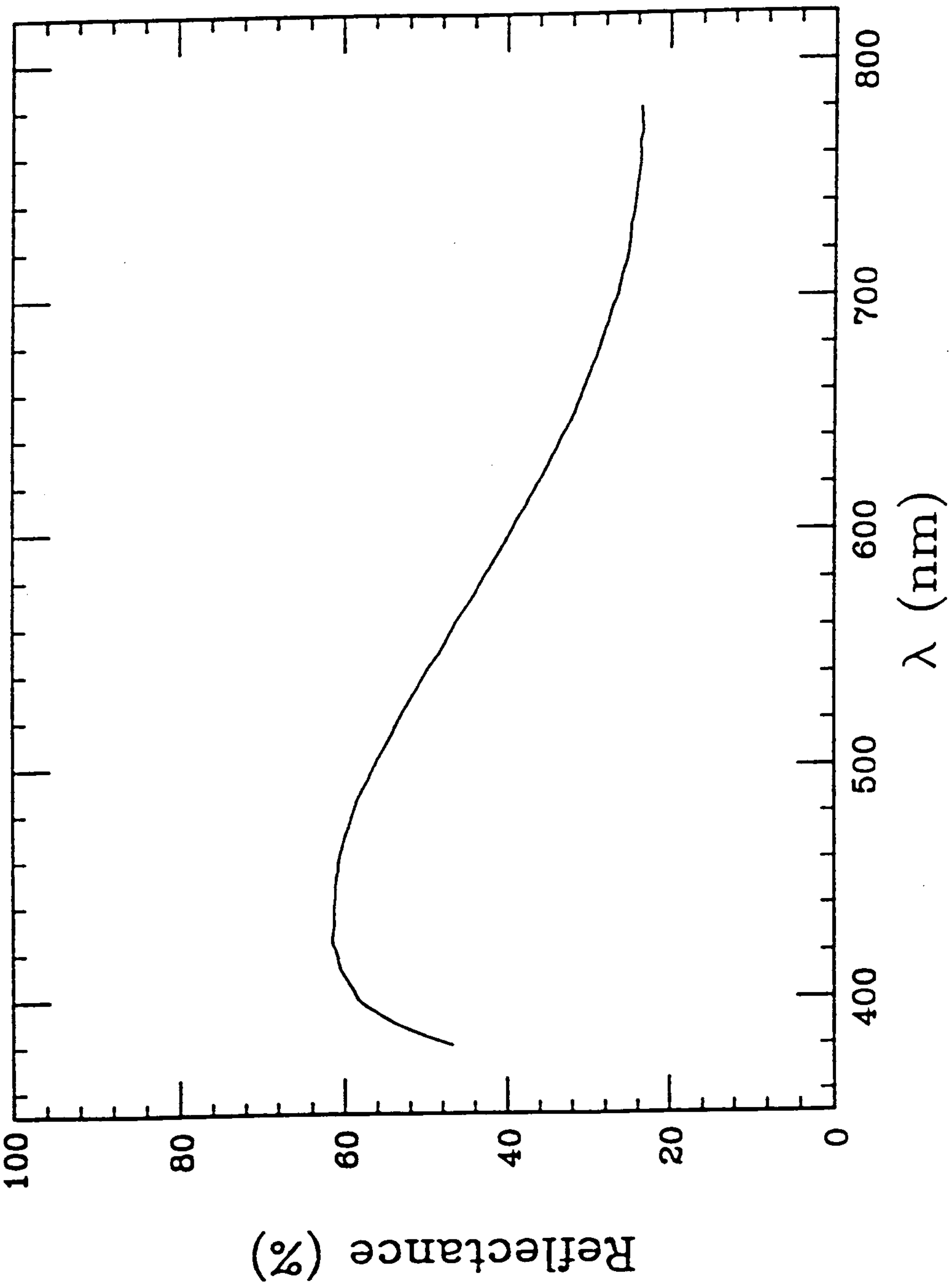


Fig. 7

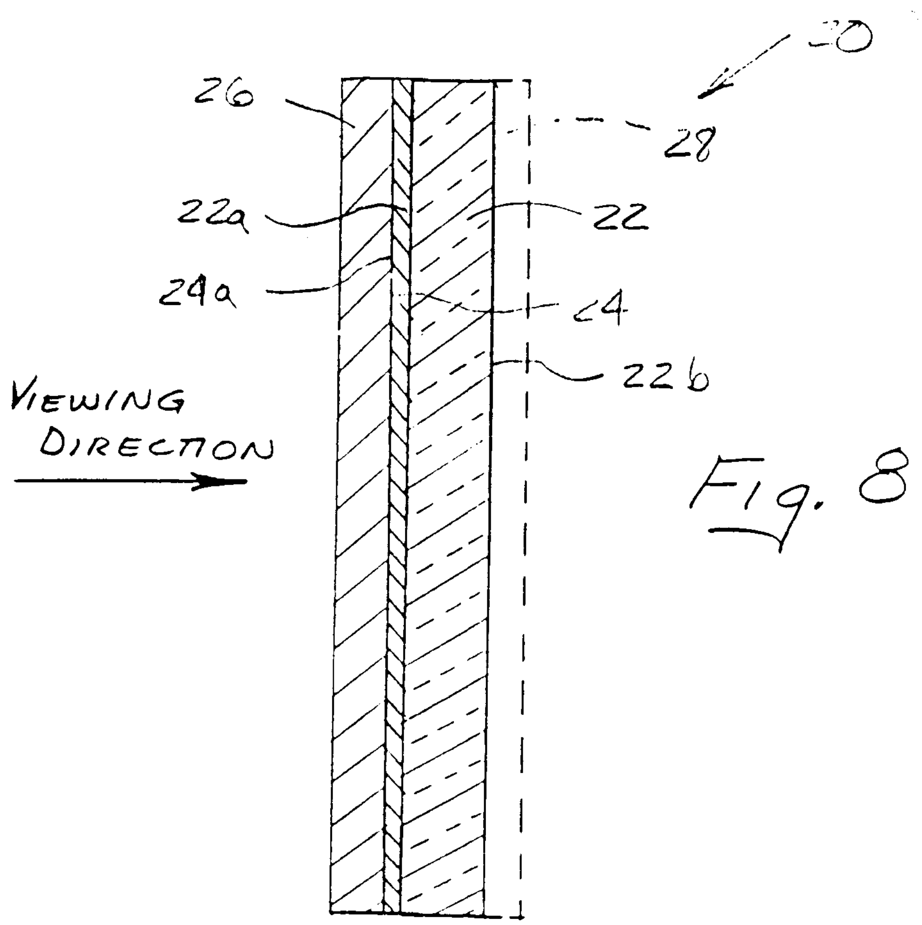


Fig. 8

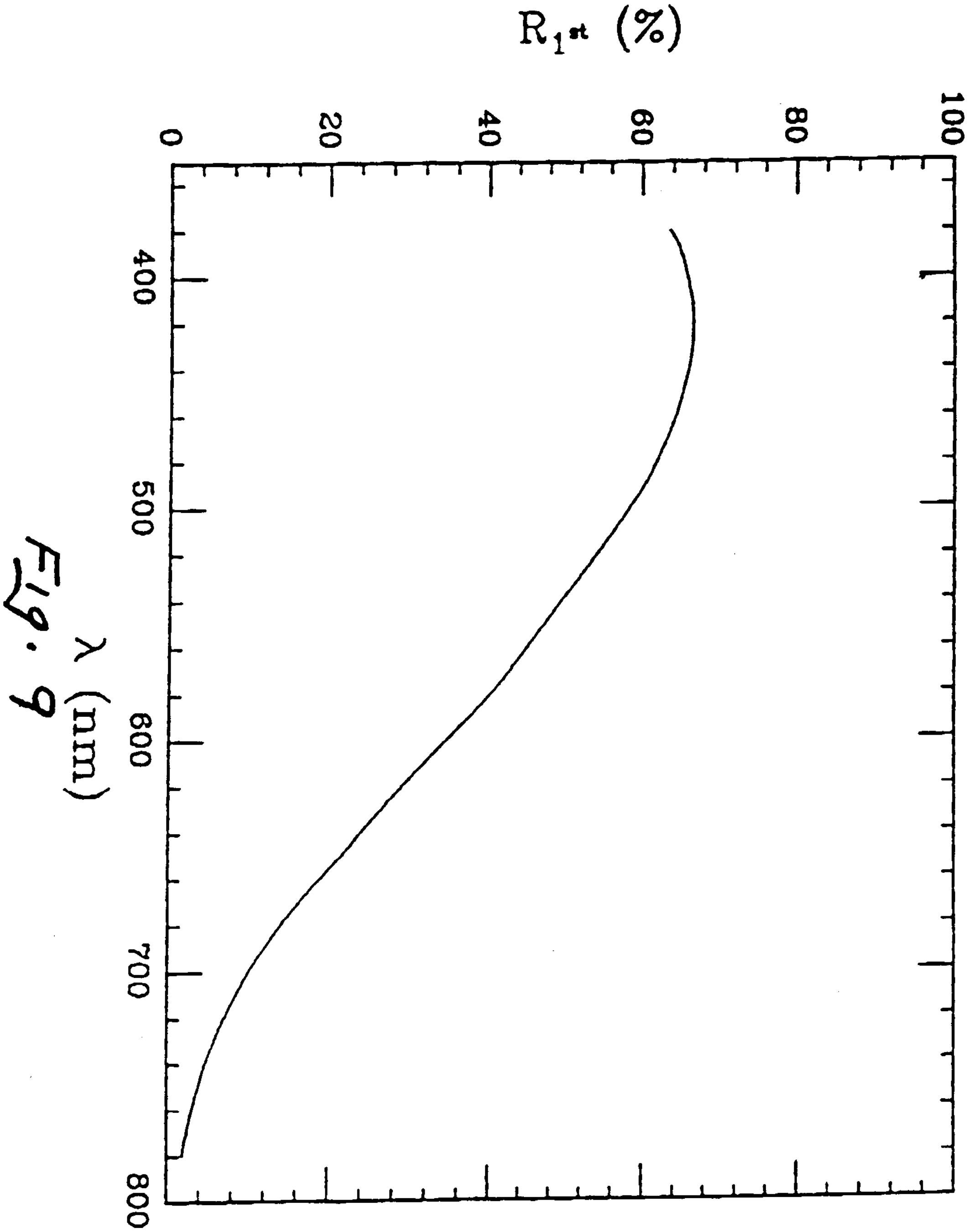


Fig. 9

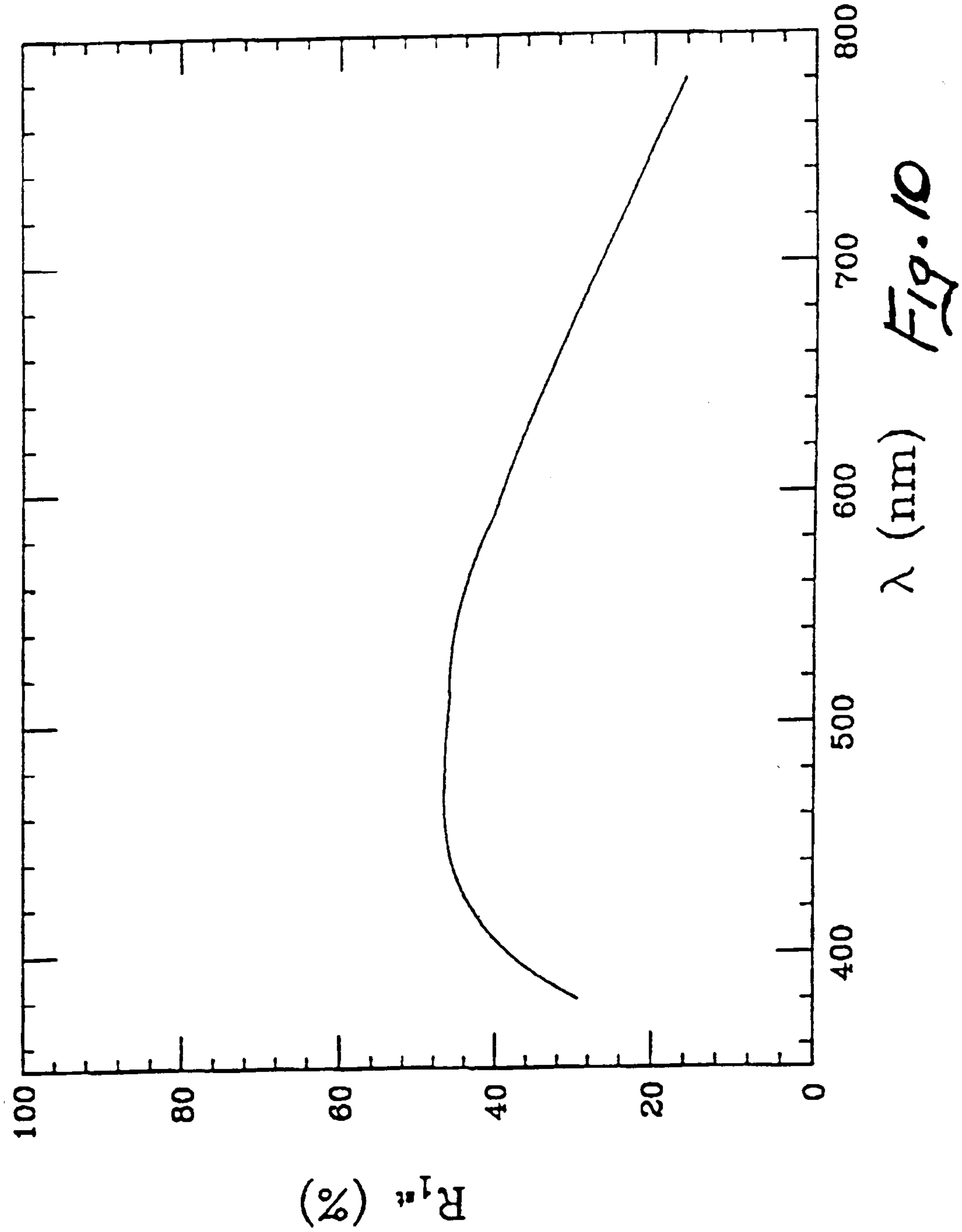


Fig. 10

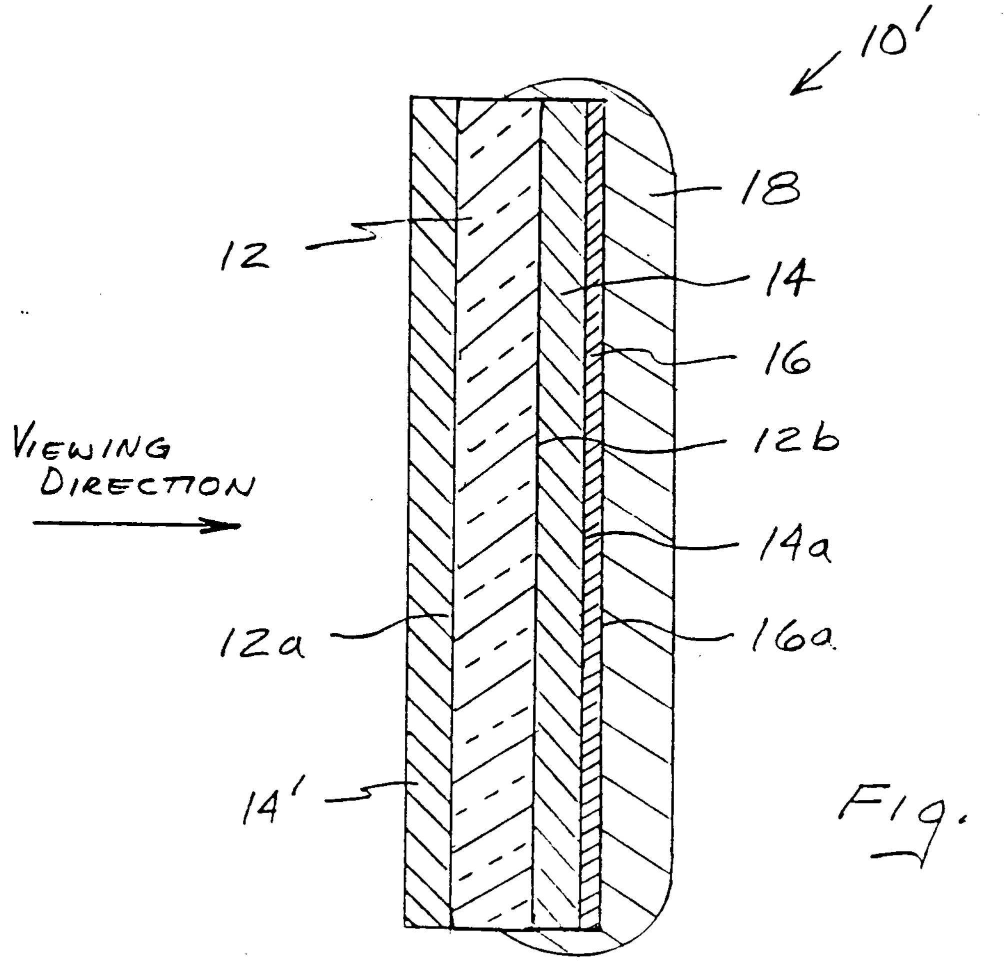


Fig. 11

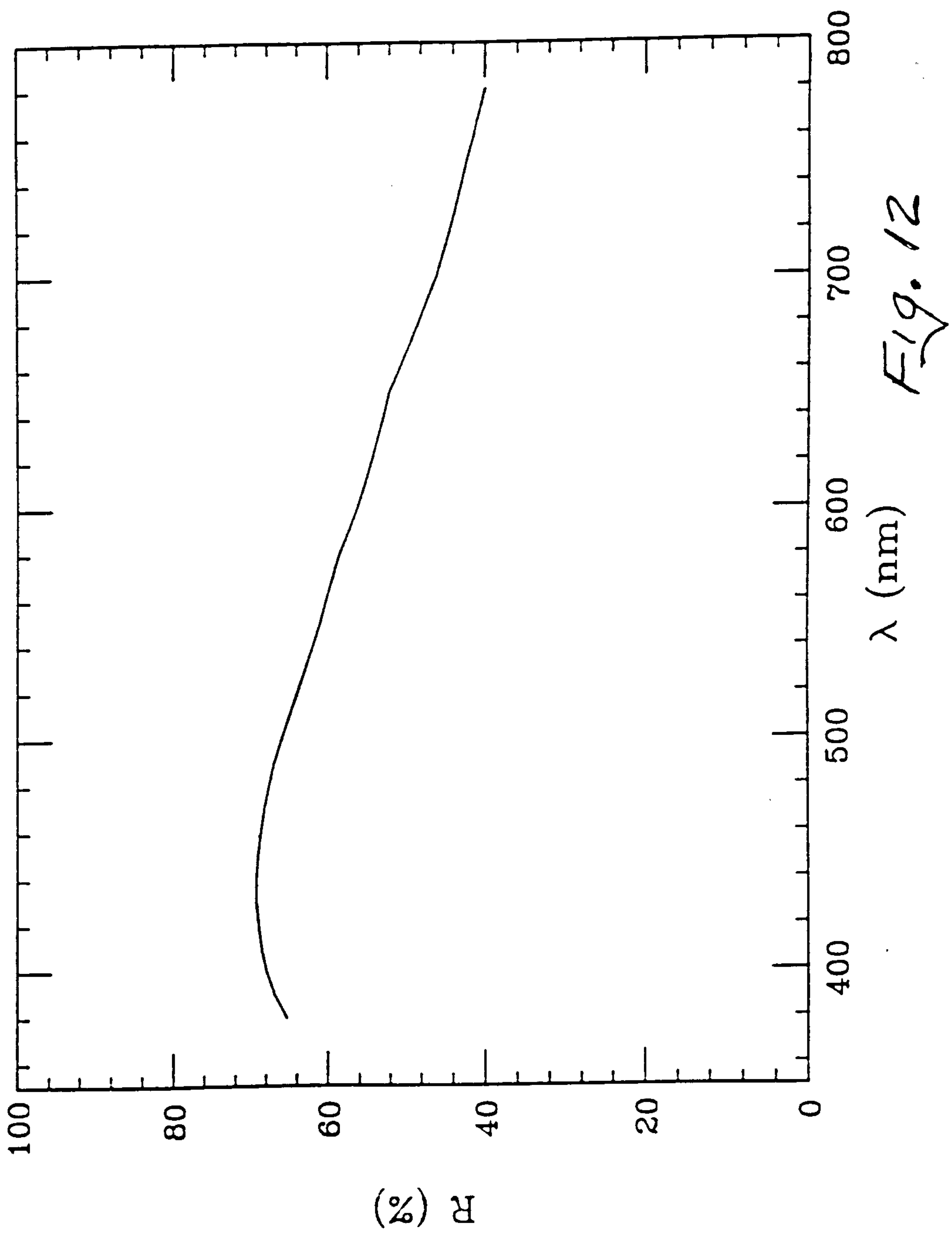


Fig. 12

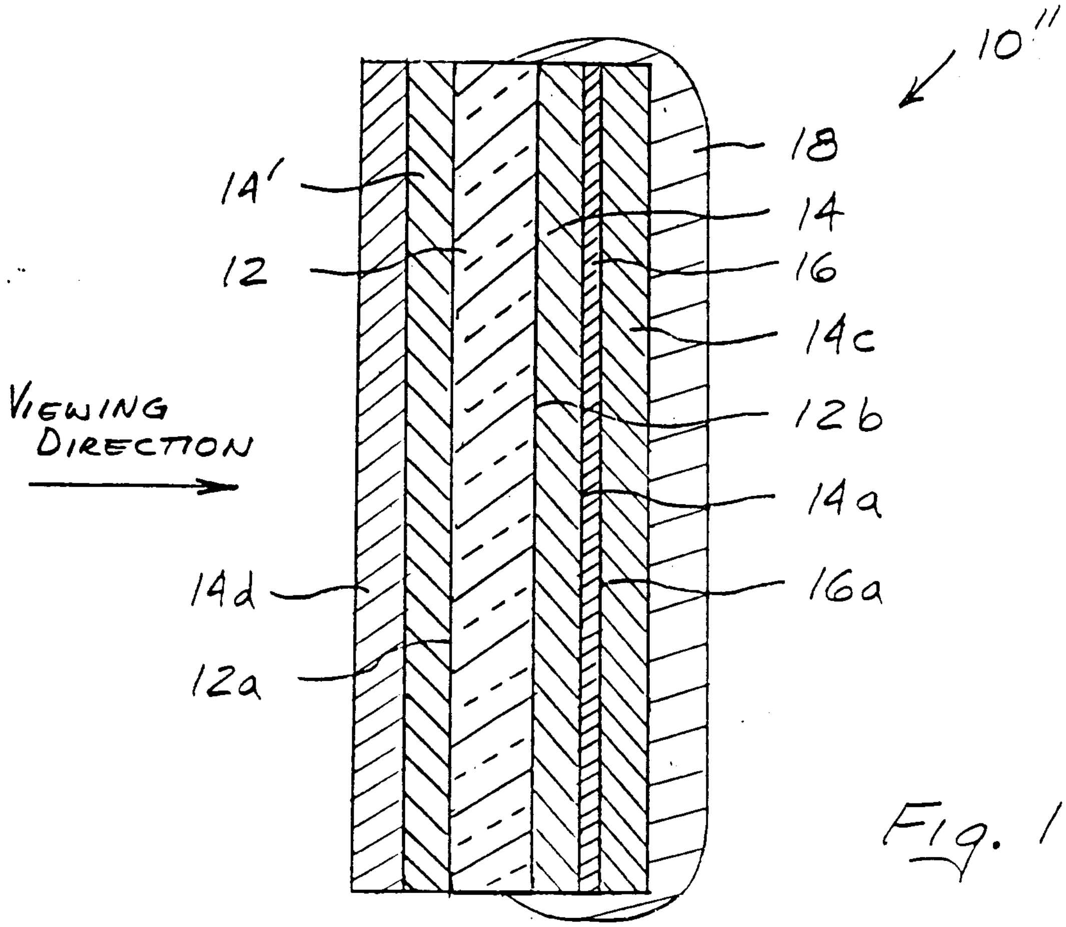


Fig. 13

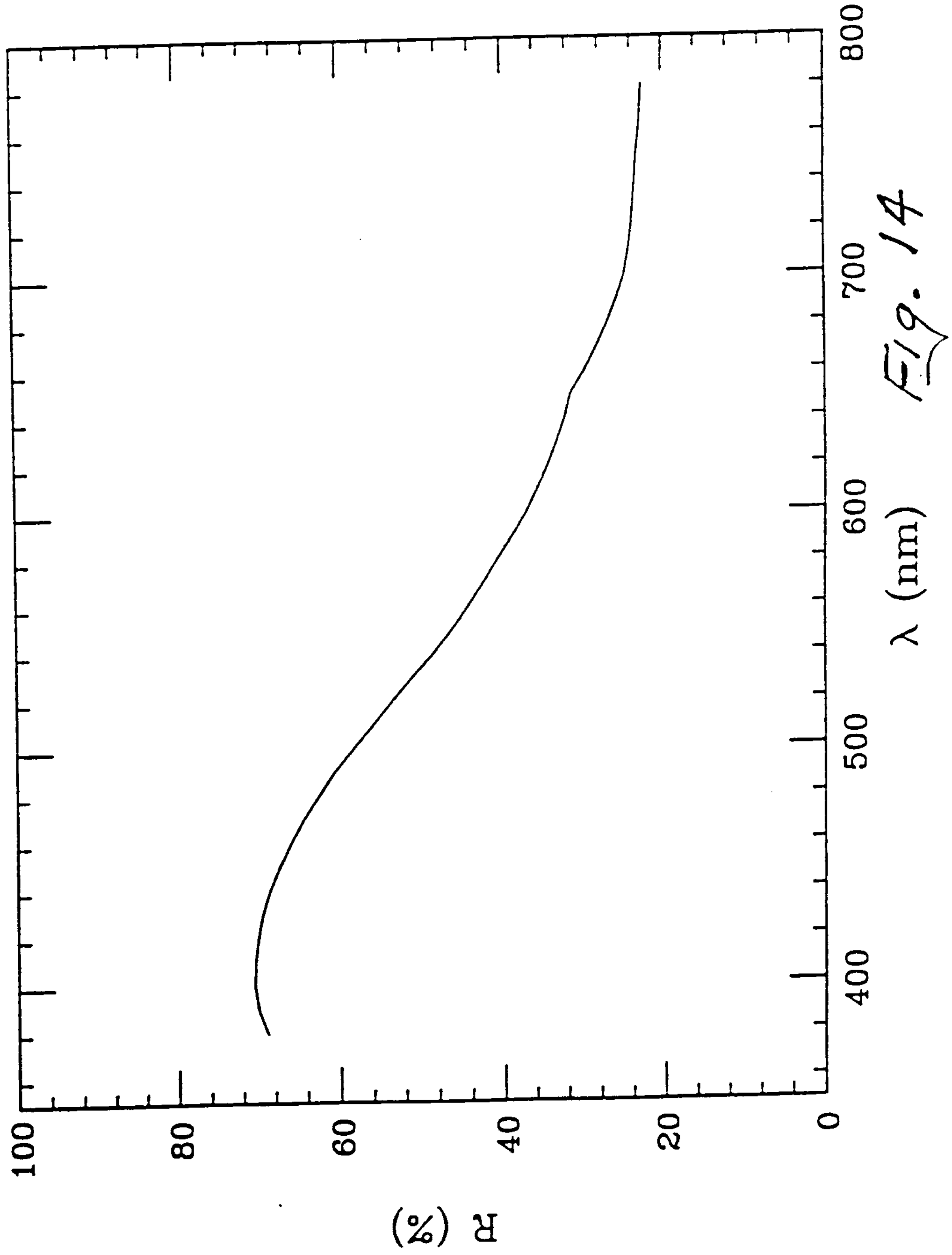


Fig. 14